# EUROPEAN PATENT SPECIFICATION

(11) **EP 0 370 424 B1**
(45) Date of publication and mention of the grant of the patent: **20.09.1995**
(21) Application number: 89121418.1
(22) Date of filing: 20.11.1989
(51) Int. Cl.: C08J 3/22, C08L 51/06, C08K 3/04

(54) **Resin composition for masterbatch**
Stammischungs-Zusammensetzung
Composition mélange-mère

(30) Priority: 21.11.1988 JP 292382/88
(43) Date of publication of application: 30.05.1990
(73) Proprietor: FUJI PHOTO FILM CO., LTD., Kanagawa 250-01 (JP)
(72) Inventor: Akao, Mutsuo, Minami Ashigara-shi Kanagawa (JP)
(74) Representative: Grünecker, Kinkeldey, Stockmair & Schwanhäusser Anwaltssozietät

(56) References cited:
- EP-A- 0 277 598
- DE-B- 1 217 060
- US-A- 4 701 359

## Description

This invention relates to a resin composition for masterbatch used for coloring black colored molded articles, such as a light-shielding film, a container for a light-shielding cartridge, a light-shielding spool, a light-shielding cassette and a light-shielding magazine, as well as to a process for producing same.

In general, thermoplastic resins used for coloring colored molded articles for photosensitive materials are colored by directly adding a coloring material such as a pigment or a dye to the thermoplastic resin as it is or by preparing a resin containing a coloring material in the form of, e.g., pellets, flakes, beads and granules. The former method comprises the dry color method using a coloring material in the solid state at ordinary temperature, the liquid color method using a coloring material in the liquid state at ordinary temperature and a paste color method. The later method comprises the masterbatch method (concentrate method) using pellets containing a coloring material in a high concentration and the compound method, which comprises blending the total amount of a coloring material with a base resin, melting and kneading the resin composition in a kneading granulating machine into pellets, and molding colored resin articles using the pellets. Respective coloring methods have advantages and disadvantages, and utilize respective characteristics. Among them, the masterbatch method is superior, e.g., in handling, no scattering at the use and cost. The applicant developed a resin composition for a masterbatch in Japanese Patent KOKAI No. 63-186740.

It is noted that the blending ratio of a masterbatch resin to a thermoplastic resin used as the base resin of molded articles is reduced in order to prevent a change in properties or to reduce cost, in molding various articles through various processes such as an inflation process, T die extrusion, blow molding and injection molding. It is necessary that the composition for a masterbatch colors the molded articles uniformly even in such a case. However, in the case of conventional resin compositions for a masterbatch, the dispersion of the light-shielding material is inferior and agglomelation is liable to occur when the light-shielding material concentration of the masterbatch resin is increased. Thus, the molded articles are not uniformly colored.

Moreover, the film-molding time and the injection molding cycle are shortened, and molded articles are rendered thinner. As a result, the masterbatch resin is required to disperse in base resins uniformly in a short time even at a low molding temperature where the degradation of the base resin is small. Therefore, it is necessary to improve the fluidity of the masterbatch resin at the molding temperature of the base resin. However, the fluidity of the masterbatch resin becomes worse with the increase of the carbon black concentration, and the masterbatch resin does not disperse in the base resin completely. It results in various problems, such as e.g. an irregular color of molded articles, fogging of photosensitive materials caused by insufficient light-shielding of the package, deviation of the color of the molded articles by the variation in the temperature and pressure of the molding machine. The above tendency is remarkable, in the case that the fluidity of the base resin is high.

EP-A-0 277 598 discloses a masterbatch resin composition for coloring packaging materials for magnetic materials which is composed of 68 wt. % EEA resin and 30 wt. % of an oil furnace carbon black as well as 2 wt. % of dimethylpolysiloxane, and which is processed and subsequently mixed with linear or branched low density polyethylene (LDPE) resin, suitable for automatic machines.

From DE-A-1 217 060, Example 1, it is known to prepare a composition for molding into various shapes by adding to 600 parts by weight of polyethylene having a lower molecular weight 400 parts by weight of carbon black having a particle size of 32nm and mixing a concentrate obtained therefrom with further polyethylene having a higher molecular weight. The polyethylene having a lower molecular weight has an acid value of 12 and is obtained by mixing 980 parts by weight of the polyethylene with 20 parts by weight of malic acid anhydride in a nitrogen atmosphere.

It is the object of the invention to provide a resin composition for a masterbatch wherein carbon black is uniformly dispersed in a high concentration and which disperses rapidly and uniformly in a base resin at a relatively low temperature, and which prevents light-shielding trouble and appearance troubles such as an irregular color and weld lines in colored articles molded using the same.

According to the present invention this object is attained with a resin composition for masterbatch which comprises 5 to 90 wt. % of modified polyolefin resin that has been modified by grafting an unsaturated carboxylic acid or derivative thereof to a polyolefin resin in an amount of 0.01 to 5 parts by weight per 100 parts by weight of the polyolefin resin, said modified polyolefin resin having a melt flow rate of more than 1 g/ 10 min and 5 to 70 wt. % of carbon black, said carbon black having a mean particle size of 15 to 120 nm, an oil adsorption value of more than 50 ml/100g and a content of volatile components of less than 3.5 wt. %.

The modified polyolefin resin is a polyolefin resin modified by an unsaturated carboxylic acid or a derivative thereof.

The polyolefin resin includes, e.g., high pressure branched low density polyethylene resin, medium density polyethylene resin, high density polyethylene resin, linear low density polyethylene resin (ethylene-α-olefin copolymer resin), homopolypropylene resin, propylene-ethylene random copolymer resin, propylene-ethylene block copolymer resin, propylene-α -olefin copolymer resin, ethylene-vinyl acetate copolymer resin, ethylene-methyl acrylate copolymer resin, ethylene-ethyl acrylate copolymer resin poly-α-olefin resins such as polybutene-1 resin, polyisobutylene resin, poly-4-methylpentene-1 resin and polyhexene-1 resin.

The unsaturated carboxylic acid usable as the modifier of the polyolefin resin is, e.g., acrylic acid, methacrylic acid, crotonic acid, isocrotonic acid, fumaric acid, maleic acid, itaconic acid, citraconic acid, angelic acid, tetrahydrophthalic acid, sorbic acid and mesaconic acid. The derivatives of the unsaturated carboxylic acid are, e.g., anhydrides, esters, amides, imides, acid halides and metal salts, and include, e.g., maleic anhydride, itaconic anhydride, citraconic anhydride, methyl acrylate, methyl methacrylate, ethyl methacrylate, ethyl acrylate, n-butyl acrylate, glycidyl acrylate, n-butyl methacrylate, isobutyl acrylate, isobutyl methacrylate, meleic acid monoethyl ester, maleic acid diethyl ester, fumaric acid monomethyl ester, fumaric acid dimethyl ester, itaconic acid monomethyl ester, itaconic acid dimethyl ester, acrylamide, methacrylamide, maleic acid monoamide, maleic acid diamide, fumaric acid monoamide, fumaric acid diamide, maleimide, sodium acrylate, sodium methacrylate, potassium acrylate and potassium methacrylate. Maleic anhydride is particularly preferred.

The unsaturated carboxylic acid or the derivative thereof is grafted to the polyolefin in an amount of 0.01 to 5 parts by weight, preferably 0.05 to 3 parts by weight, per 100 parts by weight of the polyolefin resin.

The modification may be carried out by a known method such as using an organic peroxide. Suitable organic peroxides are, e.g., benzoyl peroxide, t-butyl perbenzoate, t-butyl acetate, t-butyl peroxyisopropyl carbonate, 2,5-dimethyl-2,5-di(benzoylperoxy)hexane, t-butyl-diperadipate, t-butylperoxy-3,5,5-trimethylhexanoate, methyl ethyl ketone peroxide, cyclohexanone peroxide and di-t-butyl peroxide. 2,5-dimethyl-2,5-di(t-butylperoxy)hexane, 2,5-methyl-2,5-di(t-butylperoxy)hexyne-3 and 1,3-bis-(t-butylperoxyisopropyl)benzene are preferred. A suitable amount, for example 0.001 to 1 part by weight of the organic peroxide is added to 100 parts by weight of the polyolefin, and kneaded together with the unsaturated carboxylic acid or the derivative thereof at a temperature of higher than the melting point of the polyolefin resin, usually at 150 to 330° C.

Since the polyoefin resin is kneaded at a relatively high temperature, it is preferred to blend an antioxidant. Suitable antioxidants are, e.g., 2,6-di-t-butyl-p-cresol (BHT), 4-hydroxy-2,2,6,6-tetramethylpiperidine, tetrakis(2,2,6,6-tetramethyl-4-piperidyl)-1,2,3,4-butane tetracarboxylate, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5,5]undecane, bis(2,4-di-t-butylphenyl) pentaerythritoldiphosphite, tris(2,4-di-t-butylphenyl) phosphite, bis(2,6-di-t-butyl-4-methylphenyl) pentaerythritoldiphosphite, n-octadecyl-3-(3',5'-di-t-butyl-4'-hydroxyphenyl)propionate, 2,6-di-t-butyl-4-methylphenol, 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis[methylene-3-(3',5'-di-t-hydroxyphenyl)propionate] methane, stearyl-β-(3,5-di-t-butyl-4-hydroxyphenyl) propionate and tocopherols (vitamin E).

The modified polyolefin resin can be produced as above, and moreover, some modified polyolefin resins are commercially available. Examples of commercial modified polyolefin resins are MODIC® (Mitsubishi Petrochemical), ADMER® (Mitsui Petrochemical Industries), NOVATEC AP® (Mitsubishi Chemical Industries), IDEMITSU POLYTAC® (Idemitsu Petrochemical), MITSUI LONPLY® (Mitsui Toatsu Chemicals) and HIMIRAN® (Mitsui Polychemicals). Preferable modified polyolefin resins are, e.g., modified high pressure branched low density polyethylene resin, modified linear low density polyethylene resin (modified ethylene-α-olefin copolymer resin), modified high density polyethylene resin modified propylene-ethylene copolymer resin (including block type and random type), modified homopolypropylene resin, modified ethylene-vinyl acetate copolymer resin and modified ethylene-ethyl acrylate copolymer resin. The modified polyolefin resin has a melt flow rate (melt index, ASTM D-1238) of more than 1 g/10 min, preferably more than 2 g/10 min, further preferably more than 3 g/10 min, in view of the dispersibility of carbon black.

The carbon black can be selected from, e.g., graphite, lamp black, acetylene black, bone black, furnace black, channel black and thermal black. The mean particle size of the carbon black is in a range of 15 to 120 nm. Carbon black having a mean particle size of less than 15 nm is inferior in dispersibility, and is liable to aggregate, Therefore, it is difficult to uniformly color the molded articles with a high quality. Lumps increase, and pinhole is liable to occur in a light-shielding film. On the other hand carbon black having a mean particle size of more than 120 nm decreases the light-shielding ability, and moreover, it is expensive. The oil absorption value of the carbon black is more than 50 ml/100 g. Carbon black having an oil absorption value of less than 50 ml/100 g is inferior in dispersibility in the resin, and lumps are easily generated. The content of volatile components in the carbon black is less than 3.5 wt. %. When the content is beyond 3.5 wt. %, carbon black degrades photographic photosensitive materials and induces the troubles of fogging and variation of photosensitivity. Moreover, e.g., silver streaks and foaming occur in the molded articles. The content of the carbon black in the resin composition is 5 to 70 wt. %, preferably 15 to 50 wt. %. If the content was less than 5 wt. %, the coloring costs of the molded articles would increase. On the other hand, if the content was beyond 70 wt. %, the dispersion of the carbon black would be insufficient, the generation of lumps would increase. The fluidity of the masterbatch resin would also be inferior.

The resin composition for masterbatch of the invention may contain other thermoplastic resins including the same resin as the base resin of the molded article.

The base resin is the principal thermoplastic resin of the molded article, and blended with the masterbatch, and suitable base resins for the resin composition of the invention include various resins used for packaging materials for photosensitve materials, such as, e.g., linear low density polyethylene resin, LDPE resin, EVA resin, EEA resin, EAA resin, modified ethylene resin, modified propylene resin, ionomer resin, homopolypropylene resin, propylene-α-olefin random copolymer resin, propylene-α-olefin block copolymer resin, extremely low density polyethylene resin, MDPE resin, HDPE resin, polystyrene resin, polyvinyl chloride resin, polyvinylidene chloride resin, ABS resin, polyvinyl alcohol resin, saponified product of ethylene-vinyl acetate copolymer, polycarbonate resin, polyamide resin and polyester resin. Common resins for photographic photosensitive materials are, e.g., linear polyethylene resin, LDPE resin, HDPE resin, EEA resin, polypropylene resin, polyamide resin and polystyrene resin. Representative examples of polypropylene resin are, e.g., propylene homopolymer resin, propylene-ethylene block copolymer resin, propylene-ethylene random copolymer resin, propylene-α-olefin block copolymer and propylene-α-olefin random copolymer, and representative blend resins of the above polypropylene resins are, e.g., the blend resins with various polyethylene resins, the blend resins with various inorganic fillers, the polypropylene resins of which a part or whole is modified by an unsaturated carboxylic acid such as maleic anhydride, the blend resins with various nucleating agents, the blend resins with various light-shielding materials, the blend resins with various rubbers such as EPR or EPDM, the blend resins with various thermoplastic resins other than mentioned above and the blend resins with various additives other than mentioned above such as a lubricant or a dispersing agent. Even when the same resin as the base resin is added to the resin composition, the content is less than 90 wt. %, preferably less than 80 wt. %. If the content was beyond 90 wt. %, the dispersion of the carbon black would be inferior, unless the base resin was a modified polyolefin resin. As a result, the manufacture of an inflation film becomes difficult due to the occurrence of lumps and pinholes. Moreover, the light-shielding ability and the appearance are degraded.

In order to improve the dispersion of the carbon black, polyolefin wax is preferably added to the resin composition of the invention. Suitable examples of polyolefin waxes are linear low density polyethylene wax, branched low density polyethylene wax, polypropylene wax, paraffin wax, polyisobutylene wax, carboxylic acid-containing polyolefin wax and polyolefin wax, and those having a molecular weight of 500 to 20,000 are particularly preferred. A suitable content of the polyolefin wax is less than 70 wt. %, preferably less than 60 wt. %. If the content was beyond 70 wt. %, it would be difficult to pelletize the resin composition or masterbatch of the invention containing carbon black in a high concentration.

Moreover, it is preferable to blend a higher fatty acid and/or a higher fatty acid compound for example in order to improve the moldability, the separability of molded articles, the dispersibility of carbon black into the base resin, and to prevent mold corrosion. Suitable higher fatty acids are the saturated fatty acids and the unsaturated fatty acids having a number of carbon atoms of 6 to 34, preferably 10 to 23, and include stearic acid, oleic acid, palmitic acid, behenic acid, lauric acid, linolenic acid and erucic acid. Suitable higher fatty acid compounds are excellent in slipping character, and include metal salts (metallic soap) of the above higher fatty acids such as a magnesium salt, a zinc salt, a calcium salt, a sodium salt, a barium salt and an aluminum salt, and amides of the above higher fatty acids such as an oleic amide, an erucic amide, a stearic amide, an ethylenebisstearamide and bis fatty acid amides. A suitable content of the higher fatty acid and/or the higher fatty acid compound is less than 10 wt. %. If the content was beyond 10 wt. %, they would bleed out and adhere to the packaged articles such as photographic photosensitive materials, foods or medicines to induce various troubles such as development trouble in the photographic photosensitive materials. Moreover, slip occurs between screw and resin resulting a deviation in the quantity of the extruded resin. When an oleic amide excellent in slipping character is used an amount of less than 1 wt. %. is preferred.

The following additives may be added to the resin composition for masterbatch of the invention to the extent capable of exhibiting the characteristics of the invention.
(1) Plasticizer; e.g., phthalic acid esters, glycol ester, fatty acid esters and phosphoric acid esters.
(2) Stabilizer; e.g., lead compounds, cadmium compounds, zinc compounds, alkaline earth metal compounds and organic tin compounds.
(3) Antistatic agent; e.g., cationic surfactants, anionic surfactants, nonionic surfactants and ampholytic surfactants.
(4) Flame retardant; e.g., phosphoric acid esters, phosphoric acid ester halides, halides, inorganic materials and polyols containing phosphor.
(5) Filler; e.g., alumina, kaolin, clay, calcium carbonate, mica, talc, titanium oxide and silica.
(6) Reinforcing agent; e.g., glass lobing, metallic fiber, glass fiber, glass milled fiber and carbon fiber.
(7) Coloring agent; e.g., inorganic pigments (e.g. Al, Fe₂O₃, TiO₂, ZnO and CdS), organic pigments and dyes.
(8) Blowing agent; e.g., inorganic blowing agents (ammonium carbonate, sodium hydrogen carbonate) and organic blowing agents (nitroso compounds, azo compounds).
(9) Vulcanizing agent; vulcanization accelerator and acceleration assistant, for example.
(10) Deterioration preventing agent, ultraviolet absorber, metal deactivator and peroxide decomposing agent, for example.
(11) Nucleating agent; e.g., organic nucleating agents and inorganic nucleating agents.
(12) Coupling agent; e.g., silane compounds, titanium compounds, chromium compounds and aluminum compounds.
(13) Various thermoplastic resins, elastomers and rubbers
The resin composition for masterbatch of the invention may be produced by a known method such as kneading all components with, e.g., a banbury mixer, a kneader, a double roll kneader or a triple roll kneader, and then pelletizing by a single-shaft or double-shaft extruder, or kneading the carbon black, polyolefin wax and a higher fatty acid and/or a higher fatty acid compound by the above kneader, adding the modified polyolefin resin and base resin and then pelletizing.

Such a resin composition is blended with a base resin, and molded into various colored articles, such as packaging materials or supports for photosensitive materials, particularly packaging materials for photographic photosensitive materials, by various molding methods, such as injection molding, compression molding, rotational molding and extrusion molding such as T die extrusion, blow molding, pipe die extrusion, profile extrusion and inflation film molding.

Examples of colored molded articles suitable for the resin composition of the invention are magazine, instant film pack, plastic cartridge, cassette, spool, reel, core, reinforcing cap for core, light-shielding paper, leader paper, pigment-coated paper, neutral paper, lint-free paper, synthetic paper, nonwoven fabric, instant film unit (photosensitive material assembly), paper box in faucet type and lid-fitting type, corrugated board box, light-shielding bag including flat bag and self-standing bag, gusset bag, cushioning material including liner paper, foamed sheet, air cap and pad, adhesives, hot-melt adhesive, binder, adhesive tape, dampproofing material, waterproof material, marking material including ink and label, inflation film, T die film, cast film, extrusion-coated film, stretched film, uniaxially stretched film, biaxially stretched film, laminated film, coextruded film, coextruded inflation film, laminated film laminated by blocking, cross laminated film, corrugated board, light-shielding material including ribbon, curtain, light-shielding film and light-shielding pad, plastic case including container and cap for film cartidge, hinged case for microfilm and plastic case for movie. Besides, the resin composition is also applicable to the packaging materials for magnetic materials and for molded articles for electric apparatus disclosed in Japanese patent KOKAI No. 63-186740.

The fluidity of the resin composition for masterbatch of the invention is excellent even with a high concentration of carbon black, and is uniformly dispersed in a base resin in a short time. Irregular color and lumps do not occur in the molded article, and it is uniformly colored with good appearance. Physical strength and light-shielding are excellent.

### EXAMPLES

### Example 1

39.7 wt. % of modified EVA resin which is a modified polyolefin resin ("ADMER VE 300®", Mitsui Petrochemical Industries) having a MI (melt index, melt flowrate) of 9.0 g/10 min and a density of 0.95 g/cm³, 40 wt. % of furnace carbon black (MITSUBISHI CARBON BLACK FOR COLOR #44®, Mitsubishi Chemical Industries) having a mean particle size of 21 nm, a pH of 8.0 and an oil absorption value of 76 ml/100 g and containing 0.8 wt. % of volatile components, 20 wt. % of L-LDPE wax having a molecular weight of 2,000 and 0.3 wt. % of calcium stearate were sufficiently mixed with each other by a high speed mixer. The mixture was extruded in the form of a strand by a double-shaft extruder (POM 30®, Ikegai Corp.), and pelletized by a pelletizer to obtain a resin composition for masterbatch containing 40 wt. % of carbon black.

7.5 wt. % of the above pellets were mixed well with 92.5 wt. % of L-LDPE resin pellets (ULTZEX 2021L®, Mitsui Petrochemical Industries) having a MI of 2.1 g/10 min and a density of 0.920 g/cm³. The resin pellets mixture was supplied to an inflation film molding machine (100 mm ring die), and was molded into a light-shielding film 50 µm in thickness containing 3 wt. % of carbon black. Carbon black was uniformly dispersed in the film, and lumps, fish eye and pinhole rarely occurred. The film was excellent in light-shielding, physical strength, heat sealing properties and film moldability, did not adversely affect various photographic photosensitive materials, and it was suitable for moistureproof light-shielding bags having an antistatic property.

### Example 2

0.5 wt. % of the carbon black masterbatch resin pellets obtained in Example 1 were mixed well with 99.5 wt. % of LDPE resin pellets having a MI of 25 g/10 min and a density of 0.926 g/cm³. Using the above resin pellets mixture, caps for a photographic film cartridge corresponding to Figure 2 of Japanese Patent KOKAI No. 63-193143 were molded by an injection molding machine ( IS 75E®, Toshiba Machine) at a mold clamping pressure of 75000 kg (75 t). The molding number per ounce was 2, and the type of runner was a hot runner. Carbon black was uniformly dispersed in the caps. The caps were excellent in injection moldability, and did not adversely affect a negative photographic film ( FUJICOLOR HR 100®, Fuji Photo Film) such as by fogging.

### Example 3

2.5 wt. % of the carbon black masterbatch resin pellets obtained in Example 1 were mixed well with 97.3 wt. % of propylene-ethylene random copolymer resin having a MI of 40 g/10 min, a density of 0.900 g/cm³ and an ethylene unit content of 2 wt. % and 0.2 wt. % of dibenzylidene sorbitol which is an organic nucleating agent. Using the above resin pellets mixture, container bodies for a photographic film cartridge corresponding to Figure 1 of Japanese Patent KOKAI No. 63-204252 were molded by an injection molding machine (NESTRAL®, Sumitomo Heavy Industries) at mold clamping pressure of 150 000 kg (150 t). The molding number per ounce was 24, and the type of runner was a hot runner. The molded container body was cylindrical, and had a mean wall thickness of 0.7 mm. The content of carbon black was 0.4 wt. %. The molded container bodies were colored uniformly, and the occurrence of weld line, short shot, streakiness and gate mark was rare. The container bodies did not affect negative photographic film (FUJICOLOR HR 100®, Fuji Photo Film) adversely such as fogging.

### Example 4

2.5 wt. % of the carbon black masterbatch resin pellets obtained in Example 1 were mixed well with 87.3 wt. % of the same propylene-ethylene random copolymer resin as in Example 3 having a MI of 40 g/10 min, a density of 0.900 g/cm³ and an ethylene unit content of 2 wt. %, 10 wt. % of linear low density polyethylene resin (ULTZEX 25100J®, Mitsui Petrochemical Industries) which is a copolymer of ethylene and 4-methylpentene-1 having a MI of 10 g/10 min and a density of 0.925 g/cm³ and 0.2 wt. % of dibenzylidene sorbitol which is an organic nucleating agent. Using the above resin pellets mixture, hinged microfilm cases corresponding to Figure 3 of Japanese Utility Model KOKAI No. 54-100617 were molded by an injection molding machine (NESTRAL®, Sumitomo Heavy Industries) at a mold clamping pressure of 150 000 kg (150 t). The molding number per ounce was 2, and the type of runner was a cold runner. The mold releasability of the molded cases was good. The molded cases were colored uniformly, and the occurence of warpage, weld line, bottom sink mark and short shot was rare. They were excellent in light-shielding and fit sealability, and had a high commercial value suitable for placing photographic photosensitive materials such as microfilms and instant films.

### Example 5

Except that the modified EVA resin was replaced by maleic anhydride graft modified polyethylene resin having a MI of 10 g/10 min and a density of 0.92 g/cm³, the same resin composition as in Example 1 was used, and a light-shielding film 50 nm in thickness containing 3 wt. % of carbon black was molded using the same inflation film molding machine. Carbon black was uniformly dispersed in the film, and lumps rarely occurred. Fish eye and pinhole did not occur. The film was excellent in light-shielding, physical strength, heat sealing properties and film moldability, did not adversely affect various photographic photosensitive materials such as by fogging, and it was suitable for moistureproof light-shielding bags having antistatic properties.

When each article was molded using the above masterbatch resin composition in the same manner as in Examples 2 to 4, every molded product was excellent in moldability, uniform coloring, physical strength and appearance.

### Example 6

Except that the modified EVA resin was replaced by modified L-LDPE resin (ADMER NE 050®, Mitsui Petrochemical Industries) having a MI of 3.5 g/10 min and a density of 0.93 g/cm³, the same resin composition as in Example 1 was used, and a light-shielding film 50 nm in thickness containing 3 wt. % of carbon black was molded using the same inflation film molding machine. Carbon black was uniformly dispersed in the film, and lumps rarely occurred. Fish eye and pinhole did not occur. The film was excellent in light-shielding, physical strength, heat sealing properties and film moldability, did not adversely affect various photographic photosensitive materials, and it was suitable for moistureproof light-shielding bags having antistatic properties.

When each article was molded using the above masterbatch resin composition in the same manner as in Examples 2 to 4, every molded product was excellent in moldability, uniform coloring, physical strength and appearance.

### Example 7

29.5 wt. % of modified PP resin which is a modified polyolefin resin (MODIC P300M®, Mitsubishi Petrochimical) having a MI of 10 g/10 min and a density of 0.89 g/cm³, 40 wt. % of furnace carbon black (MITSUBISHI CARBON BLACK FOR COLOR #40®, Mitsubishi Chemical Industries) having a mean particle size of 20 nm, a pH of 8.0 and an oil absorption value of 110 ml/100 g and containing 0.8 wt. % of volatile components, 20 wt. % of low density polyethylene wax (HIWAX 4400G®, Mitsui Petrochemical Industries) having a molecular weight of 4,000, 0.3 wt. % of zinc stearate and 0.2 wt. % of oleic amide were sufficiently mixed with each other by a high speed mixer. The mixture was extruded in the form of a strand by a double-shaft extruder (POM 30®, Ikegai Corp.), and pelletized by a pelletizer to obtain a resin composition for masterbatch containing 40 wt. % of carbon black.

Using the above masterbatch resin pellets instead of the carbon black masterbatch resin pellets obtained in Example 1, a resin pellets mixture was prepared in the same manner as in Example 4, and highed microfilm cases were molded by the same injection molding machine under the same conditions as in Example 4. The molded hinged cases had superior qualities to those obtained in Example 4.

When each article was molded using the above resin composition for masterbatch containing the modified PP resin in the same manner as in Examples 1 to 3, every molded product was excellent in moldability, uniform coloring, physical strength and appearance.

## Claims

1. A resin composition for masterbatch which comprises 5 to 90 wt. % of modified polyolefin resin that has been modified by grafting an unsaturated carboxylic acid or derivative thereof to a polyolefin resin in an amount of 0.01 to 5 parts by weight per 100 parts by weight of the polyolefin resin, said modified polyolefin resin having a melt flow rate of more than 1 g/ 10 min and 5 to 70 wt. % of carbon black, said carbon black having a mean particle size of 15 to 120 nm, an oil adsorption value of more than 50 ml/100g and a content of volatile components of less than 3.5 wt. %.

2. The resin composition of claim 1 wherein said modified polyolefin resin is a member selected from the group consisting of modified high pressure branched low density polyethylene resin, modified linear low density polyethylene resin (modified ethylene-α-olefin copolymer resin), modified high density polyethylene resin, modified propylene-ethylene copolymer resin (including block type and random type), modified homopolypropylene resin, modified ethylene-vinyl acetate copolymer resin, modified ethylene-ethyl acrylate copolymer resin, and modified ethylene-methyl acrylate copolymer resin.

3. The resin composition of claim 1 further containing less than 70 wt. % of polyolefin wax.

4. The resin composition of claim 3 wherein said polyolefin wax has a molecular weight of 500 to 20,000.

5. The resin composition of claim 1 furtehr containing an antioxidant.

6. The resin composition of claim 1 further containing a higher fatty acid, a higher fatty acid compound or a mixture therof.

7. The resin composition of claim 1 wherein the modified polyolefin resin is obtained by kneading together 0.001 to 1 part by weight of organic peroxide per 100 parts by weight of the polyolefin resin, the polyolefin resin and the unsaturated carboxylic acid or the derivative thereof, at a kneading temperature which is higher than the melting point of the polyolefin resin.

8. The resin composition of claim 7 wherein said kneading is carried out at 150 to 330°C.

9. The resin composition of claim 3 wherein the polyolefin wax is selected from the group consisting of linear low density polyethylene wax, branched low density polyethylene wax, polypropylene wax, paraffin wax, polyisobutylene wax, and carboxylic acid-containing polyolefin wax.

10. The resin composition of claim 1 wherein the amount of said carbon black is 15 to 50 wt. %.

11. A method of producing a resin composition for a masterbatch according to any of claims 1 to 10 which comprises forming a mixture of 5 to 90 wt. % of modified polyolefin resin obtained by kneading together 100 parts by weight of a polyolefin resin with 0.001 to 1 part by weight of organic peroxide and 0.01 to 5 parts by weight of unsaturated carboxylic acid or a derivative thereof, at a kneading temperature which is higher than the melting point of the polyolefin resin, said modified polyolefin resin having a melt flow rate of more than 1 g/10 min, 5 to 70 wt. % of carbon black, said carbon black having a mean particle size of 15 to 120 nm an oil adsorption value of more than 50 ml/100 g and a content of volatile components of less than 3.5 wt. % and optionally the polyolefin wax, the antioxidant and the higher fatty acid, higher fatty acid compound or mixture thereof and pelletizing the mixture with an extruder.

12. A method of preparing a packaging material for a photographic photosensitive material comprising blending a base resin with a resin for a masterbatch according to any of claims 1 to 10 and molding the resulting blend into the packaging material.

13. The method of claim 12 wherein the base resin is a member selected from the group consisting of linear low density polyethylene resin, low density polyethylene resin, ethylene-vinyl acetate copolymer resin, ethylene-ethyl acrylate copolymer resin, ethylene-acrylic acid copolymer resin, ionomer resin, homopolypropylene resin, propylene-α-olefin random copolymer resin, propylene-α-olefin block copolymer resin, extremely low density polyethylene resin, middle density polyethylene resin, high density polyethylene resin, polystyrene resin, polyvinyl chloride resin, polyvinylidene chloride resin, acrylonitrile-butadiene-styrene copolymer resin, polyvinyl alcohol resin, saponified product of ethylene-vinyl acetate copolymer resin, polycarbonate resin, polyamide resin and polyester resin.

14. The method of claim 12 wherein the base resin is a member selected from the group consisting of linear low density polyethylene resin, high density polyethylene resin, ethylene-ethyl acrylate resin, polypropylene resin, propylene-ethylene copolymer resin (including block type and random type), polyamide resin and polystyrene resin.

## Patentansprüche

1. Harzzusammensetzung für eine Stammischung, welche umfaßt: 5 bis 90 Gew.-% modifiziertes Polyolefinharz, welches durch Aufpfropfen einer ungesättigten Carbonsäure oder eines Derivats davon auf ein Polyolefinharz in einer Menge von 0,01 bis 5 Gewichtsteilen pro 100 Gewichtsteile des Polyolefinharzes modifiziert worden ist, wobei das modifizierte Polyolefinharz eine Fließfähigkeit (melt flow rate) von mehr als 1 g/10 min hat, und 5 bis 70 Gew.-% Ruß, wobei der Ruß eine mittlere Teilchengröße von 15 bis 120 nm, einen Öladsorptionswert von mehr als 50 ml/100 g und einen Gehalt an flüchtigen Bestandteilen von weniger als 3,5 Gew.-% hat.

2. Harzzusammensetzung nach Anspruch 1, worin das modifizierte Polyolefinharz ein Bestandteil ist, gewählt aus der Gruppe, bestehend aus modifiziertem verzweigtem Hochdruckpolyethylenharz niederer Dichte, modifiziertem linearem Polyethylenharz niederer Dichte (modifiziertem Ethylen-α-Olefin-Copolymer-Harz), modifiziertem Polyethylenharz hoher Dichte, modifiziertem Propylen-Ethylen-Copolymer-Harz (wozu Block-Copolymere und statistische Copolymere gehören), modifiziertem Homopolypropylenharz, modifiziertem Ethylen-Vinylacetat-Copolymer-Harz, modifiziertem Ethylen-Ethylacrylat-Copolymer-Harz und modifiziertem Ethylen-Methylacrylat-Copolymer-Harz.

3. Harzzusammensetzung nach Anspruch 1, weiterhin enthaltend weniger als 70 Gew.-% Polyolefinwachs.

4. Harzzusammensetzung nach Anspruch 3, worin das Polyolefinwachs ein Molekulargewicht von 500 bis 20000 hat.

5. Harzzusammensetzung nach Anspruch 1, weiterhin enthaltend ein Antioxidationsmittel.

6. Harzzusammensetzung nach Anspruch 1, weiterhin enthaltend eine höhere Fettsäure, eine höhere Fettsäureverbindung oder ein Gemisch davon.

7. Harzzusammensetzung nach Anspruch 1, worin das modifizierte Polyolefinharz durch Zusammenkneten von 0,001 bis 1 Gewichtsteilen organisches Peroxid pro 100 Gewichtsteile des Polyolefinharzes, des Polyolefinharzes und der ungesättigten Carbonsäure oder des Derivats davon bei einer Knettemperatur, welche höher als der Schmelzpunkt des Polyolefinharzes liegt, erhalten wird.

8. Harzzusammensetzung nach Anspruch 7, worin das Kneten bei 150 bis 330 °C durchgeführt wird.

9. Harzzusammensetzung nach Anspruch 3, worin das Polyolefinwachs gewählt wird aus der Gruppe, bestehend aus linearem Polyethylenwachs niederer Dichte, verzweigtem Polyethylenwachs niederer Dichte, Polypropylenwachs, Paraffinwachs, Polyisobutylenwachs und Carbonsäure-haltigem Polyolefinwachs.

10. Harzzusammensetzung nach Anspruch 1, worin die Menge des Rußes 15 bis 50 Gew.-% beträgt.

11. Verfahren zum Herstellen einer Harzzusammensetzung für eine Stammischung nach einem der Ansprüche 1 bis 10, welches das Bilden eines Gemisches aus 5 bis 90 Gew.-% modifiziertem Polyolefinharz, welches durch Zusammenkneten von 100 Gewichtsteilen eines Polyolefinharzes mit 0,001 bis 1 Gewichtsteilen organischem Peroxid und 0,01 bis 5 Gewichtsteilen ungesättigter Carbonsäure oder einem Derivat davon bei einer Knettemperatur, welche höher als der Schmelzpunkt des Polyolefinharzes ist, erhalten wird, wobei das modifizierte Polyolefinharz eine Fließfähigkeit von mehr als 1 g/10 min hat, 5 bis 70 Gew.-% Ruß, wobei der Ruß eine mittlere Teilchengröße von 15 bis 120 nm, einen Öladsorptionswert von mehr als 50 ml/100 g und einen Gehalt an flüchtigen Komponenten von weniger als 3,5 Gew.-% hat, und gegebenenfalls dem Polyolefinharz, dem Antioxidationsmittel und der höheren Fettsäure, höheren Fettsäureverbindung oder dem Gemisch davon, und das Pelletieren des Gemisches mit einem Extruder umfaßt.

12. Verfahren zum Herstellen eines Verpackungsmaterials für ein photographisches lichtempfindliches Material, umfassend das Vermischen eines Basisharzes mit einem Harz für eine Stammischung nach einem der Ansprüche 1 bis 10, und das Formen der daraus hervorgehenden Mischung zu dem Verpackungsmaterial.

13. Verfahren nach Anspruch 12, worin das Basisharz ein Bestandteil ist, gewählt aus der Gruppe bestehend aus linearem Polyethylenharz niederer Dichte, Polyethylenharz niederer Dichte, Ethylen-Vinylacetat-Copolymer-Harz, Ethylen-Ethylacrylat-Copolymer-Harz, Ethylen-Acrylsäure-Copolymer-Harz, Ionomerharz, Homopolypropylenharz, statistischem Propylen-α-Olefin-Copolymer-Harz, Propylen-α-Olefin-Blockcopolymer-Harz, Polyethylenharz extrem niederer Dichte, Polyethylenharz mittlerer Dichte, Polyethylenharz hoher Dichte, Polystyrolharz, Polyvinylchloridharz, Polyvinylidenchloridharz, Acrylnitril-Butadien-Styrol-Copolymer-Harz, Polyvinylalkohol-Harz, einem verseiften Produkt von Ethylen-Vinylacetat-Copolymer-Harz, Polycarbonatharz, Polyamidharz und Polyesterharz.

14. Verfahren nach Anspruch 12, worin das Basisharz ein Bestandteil ist, gewählt aus der Gruppe bestehend aus linearem Polyethylenharz niederer Dichte, Polyethylenharz hoher Dichte, Ethylen-Ethylacrylat-Harz, Polypropylenharz, Propylen-Ethylen-Copolymer-Harz (wozu Block-Copolymere und statistische Copolymere gehören), Polyamidharz und Polystyrolharz.

## Revendications

1. Composition de résine pour lot maître, qui comprend 5 à 90 % en poids de résine de polyoléfine modifiée qui a été modifiée en greffant un acide carboxylique insaturé ou un dérivé de celui-ci sur une résine de polyoléfine en une quantité de 0,01 à 5 parties en poids pour 100 parties en poids de la résine de polyoléfine, ladite résine de polyoléfine modifiée ayant un débit au fondu supérieur à 1 g/10 min., et 5 à 70 % en poids de noir de carbone, ledit noir de carbone ayant une grosseur moyenne de particules de 15 à 120 nm, une valeur d'adsorption d'huile supérieure à 50 ml/100 g et une teneur en constituants volatils inférieure à 3,5 % en poids.

2. Composition de résine selon la revendication 1, dans laquelle ladite résine de polyoléfine modifiée est un élément choisi dans le groupe constitué d'une résine de polyéthylène basse densité ramifiée, haute pression, modifiée, d'une résine de polyéthylène basse densité linéaire modifiée (résine de copolymère éthylène-α-oléfine modifiée), d'une résine de polyéthylène haute densité modifiée, d'une résine de copolymère propylène-éthylène modifiée (incluant de type séquencé et de type aléatoire), d'une résine d'homopolypropylène modifiée, d'une résine de copolymère éthyléne-acétate de vinyle modifiée, d'une résine de copolymère éthylène-acrylate d'éthyle modifiée et d'une résine de copolymère éthylène-acrylate de méthyle modifiée.

3. Composition de résine selon la revendication 1, contenant en outre moins de 70 % en poids de cire de polyoléfine.

4. Composition de résine selon la revendication 3, dans laquelle ladite cire de polyoléfine a un poids moléculaire de 500 à 20 000.

5. Composition de résine selon la revendication 1, contenant en outre un antioxydant.

6. Composition de résine selon la revendication 1, contenant en outre un acide gras supérieur, un composé d'acide gras supérieur ou un mélange de ceux-ci.

7. Composition de résine selon la revendication 1, dans laquelle la résine de polyoléfine modifiée est obtenue en malaxant ensemble 0,001 à 1 partie en poids de peroxyde organique pour 100 parties en poids de la résine de polyoléfine, la résine de polyoléfine et l'acide carboxylique insaturé ou le dérivé de celui-ci, à une température de malaxage qui est plus élevée que le point de fusion de la résine de polyoléfine.

8. Composition de résine selon la revendication 7, dans laquelle ledit malaxage est effectué à 150 à 330 °C.

9. Composition de résine selon la revendication 3, dans laquelle la cire de polyoléfine est choisie dans le groupe constitué d'une cire de polyéthylène basse densité linéaire, d'une cire de polyéthylène basse densité ramifiée, d'une cire de polypropylène, d'une cire de paraffine, d'une cire de polyisobutylène et d'une cire de polyoléfine contenant un acide carboxylique.

10. Composition de résine selon la revendication 1, dans laquelle la quantité dudit noir de carbone est 15 à 50 % en poids.

11. Procédé de préparation d'une composition de résine pour un lot maître selon l'une quelconque des revendications 1 à 10, qui comprend la formation d'une mélange de 5 à 90 % en poids de résine de polyoléfine modifiée obtenue en malaxant ensemble 100 parties en poids d'une résine de polyoléfine avec 0,001 à 1 partie en poids de peroxyde organique et 0,01 à 5 parties en poids d'acide carboxylique insaturé ou d'un dérivé de celui-ci, à une température de malaxage qui est plus élevée que le point de fusion de la résine de polyoléfine, ladite résine de polyoléfine modifiée ayant un débit au fondu supérieur à 1 g/10 min., de 5 à 70 % en poids de noir de carbone, ledit noir de carbone ayant une grosseur moyenne de particules de 15 à 120 nm, une valeur d'adsorption d'huile supérieure à 50 ml/100 g et une teneur en constituants volatils inférieure à 3,5 % en poids et, éventuellement, la cire de polyoléfine, l'antioxydant et l'acide gras supérieur, un composé d'acide gras supérieur ou un mélange de ceux-ci, et la granulation du mélange avec une extrudeuse.

12. Procédé de préparation d'une matière d'emballage pour une matière photographique photosensible, comprenant le mélange d'une résine de base avec une résine pour un lot maître selon l'une quelconque des revendications 1 à 10 et le moulage du mélange obtenu en la matière d'emballage.

13. Procédé selon la revendication 12, dans lequel la résine de base est un élément choisi dans le groupe constitué d'une résine de polyéthylène basse densité linéaire, d'une résine de polyéthylène basse densité, d'une résine de copolymère éthylène-acétate de vinyle, d'une résine de copolymère éthylène-acrylate d'éthyle, d'une résine de copolymère éthylène-acide acrylique, d'une résine d'ionomère, d'une résine d'homopolypropylène, d'une résine de copolymère aléatoire propylène-α-oléfine, d'une résine de copolymère séquencé propylène-α-oléfine, d'une résine de polyéthylène de densité extrêmement basse, d'une résine de polyéthyléne de densité moyenne, d'une résine de polyéthylène haute densité, d'une résine de polystyrène, d'une résine de chlorure de polyvinyle, d'une résine de chlorure de polyvinylidène, d'une résine de copolymère acrylonitrile-butadiène-styrène, d'une résine d'alcool polyvinylique, d'un produit saponifié d'une résine de copolymère éthylène-acétate de vinyle, d'une résine de polycarbonate, d'une résine de polyamide et d'une résine de polyester.

14. Procédé selon la revendication 12, dans lequel la résine de base est un élément choisi dans le groupe constitué d'une résine de polyéthylène basse densité linéaire, d'une résine de polyéthylène haute densité, d'une résine éthylène-acrylate d'éthyle, d'une résine de polypropylène, d'une résine de copolymère propylène-éthylène (incluant de type séquencé et de type aléatoire), d'une résine de polyamide et d'une résine de polystyrène.
